# DEMANDE DE BREVET EUROPEEN

(11) **EP 4 808 039 A1**
(43) Date de publication de la demande: **16.09.2026**
(21) Numéro de dépôt: 26164031.2
(22) Date de dépôt: 11.03.2026
(51) Int. Cl.: H04L 9/00, H04L 9/08, H04L 9/14

(54) **PROCÉDÉ DE TRAITEMENT SÉCURISÉ DE DONNÉES D'ENTRÉE PROVENANT D'UNE PLURALITÉ DE TERMINAUX**

(30) Priorité: 11.03.2025 FR 2502431
(71) Demandeur: Commissariat à l'Energie Atomique et aux Energies Alternatives, 75015 Paris (FR)
(72) Inventeur: SIRDEY, Renaud, 91191 Gif-sur-Yvette Cedex (FR); BULTEL, Jean-Paul, 91191 Gif-sur-Yvette Cedex (FR)
(74) Mandataire: Germain Maureau

(57) **Abrégé**

La présente invention concerne un procédé de traitement sécurisé de données d'entrée, comprenant :
(a) Obtention d'une première donnée correspondant à une donnée d'entrée complétée d'un bloc de bourrage prédéfini et chiffrée de manière homomorphe ;
(b) Pour chaque première donnée, calcul d'une pluralité de troisièmes données correspondant à la somme avec un masque aléatoire chiffré de manière homomorphe ;
(c) Pour chaque troisième donnée, calcul d'une pluralité de quatrièmes données correspondant chacune au résultat d'une tentative de déchiffrement homomorphe de la troisième donnée avec chaque clé de déchiffrement, rechiffré de manière homomorphe ;
(d) Pour chaque quatrième donnée, calcul d'au moins une cinquième donnée correspondant à la différence avec un des masques aléatoires rechiffré de manière homomorphe ;
(e) identification des cinquièmes données comprenant un bloc de bourrage coïncidant avec ledit bloc de bourrage prédéfini.
(f) Application dans le domaine chiffré d'une fonction correspondant au traitement souhaité à partir des cinquièmes données identifiées.

## Description

### DOMAINE TECHNIQUE GÉNÉRAL

La présente invention se rapporte au domaine du chiffrement homomorphe. Plus précisément, elle concerne un procédé de traitement sécurisé de données d'entrée provenant d'une pluralité de terminaux en utilisant les propriétés du chiffrement homomorphe.

### ETAT DE L'ART

On connait des techniques de sécurisation de calcul par chiffrement homomorphe, permettant à un serveur d'effectuer un calcul sur des données chiffrées sans recueillir aucune information en clair sur ces données, ni même sur le résultat du calcul. Cela est en particulier souhaitable si l'on travaille sur des données sensibles et confidentielles, telles que des données personnelles. Par exemple, cela est utile pour un hôpital cherchant à faire traiter des données relatives à ses patients.

Pour ce faire, un chiffrement homomorphe est un chiffrement cryptographique tel que pour un calcul donné, il devient possible de chiffrer les données, faire certains calculs associés audit calcul donné sur les données chiffrées, et les déchiffrer, en obtenant le même résultat que si l'on avait fait ledit calcul donné directement sur les données en clair.

On appelle un chiffrement « totalement homomorphe » (FHE, « Fully Homomorphic Encryption ») lorsqu'il permet d'évaluer autant d'additions ou de multiplications séquentielles que l'on souhaite dans le domaine chiffré, voire toutes les opérations de l'espace des fonctions calculables.

Les chiffrements homomorphes connus apportent satisfaction, mais des difficultés surviennent dans un contexte multi-utilisateurs, par exemple si l'on souhaite un traitement impliquant les données de plusieurs hôpitaux.

En effet, les données issues de deux utilisateurs différents sont chiffrées de manière homomorphe avec deux clés différentes, ce qui donc empêche de travailler dans le domaine chiffré.

Une idée pour résoudre ce problème est d'utiliser en combinaison avec le chiffrement homomorphe un module matériel de sécurité (en anglais « Hardware Security Module »), généralement de type TEE (« trusted execution environment »). Il s'agit souvent d'une enclave sécurisée d'un processeur, mais il peut s'agit d'un élément dédié, tant qu'il est considéré inviolable. Et il est en effet déjà connu dans un contexte de chiffrement homomorphe de déléguer une partie des calculs au TEE pour des questions de performance, voir les demandes FR 2314410 et FR 2314913.

On peut stocker sur ce TEE les clés de déchiffrement homomorphe associées à chaque utilisateur de sorte à ce qu'il puisse déchiffrer les données des utilisateurs et les rechiffrer sous une clé commune, ce qui va permettre la mise en œuvre dans le domaine chiffré d'un traitement impliquant n'importe laquelle de ces données.

Le problème est que, même si l'on suppose qu'on peut faire confiance au TEE, il a potentiellement accès aux données des utilisateurs déchiffrées (on parle de TEE « honnête mais curieux », ou « semi-honnête », ce qui en cryptographie est un type d'adversaire qui suit le protocole correctement, mais qui essaie d'apprendre autant que possible à partir des informations disponibles).

Les demandes FR 2314410 et FR 2314913 proposent des techniques de masquages qui améliorent la confidentialité en empêchant toute lecture en clair par le TEE des données des utilisateurs. Toutefois, dans un contexte multi-utilisateurs, ces techniques nécessitent que le TEE puisse relier chaque donnée d'entrée à un élément public spécifique à l'utilisateur dont elle provient, et donc ne garantit pas l'anonymat

Il serait souhaitable de disposer d'un nouveau procédé de calcul sécurisé multi-utilisateurs basé sur le chiffrement homomorphe, qui garde tous les avantages des techniques connues en matière de sécurité, fiabilité et protection des données, et soit en plus parfaitement anonyme vis-à-vis des utilisateurs, i.e. dans lequel aucun équipement et en particulier pas un TEE ne puisse apprendre quoi que ce soit sur les données ou leur origine.

### PRÉSENTATION DE L'INVENTION

La présente invention se rapporte donc selon un premier aspect à un procédé de traitement sécurisé de données d'entrée, le procédé étant caractérisé en ce qu'il comprend la mise en œuvre d'étapes de :
(a) Obtention par des moyens de traitement de données d'un serveur, depuis au moins un terminal client d'un ensemble de terminaux client chacun associé à une paire d'une clé de chiffrement et d'une clé de déchiffrement stockée par un module matériel de sécurité connecté auxdits moyens de traitement de données, d'une première donnée correspondant à une donnée d'entrée dudit terminal client complétée d'un bloc de bourrage prédéfini et chiffrée de manière homomorphe avec la clé de chiffrement associée audit terminal client ;
(b) Pour chaque première donnée, calcul par les moyens de traitement de données, d'une pluralité de troisièmes données correspondant chacune à la somme de ladite première donnée et d'une deuxième donnée correspondant à un masque aléatoire d'un ensemble de masques aléatoires chiffrés de manière homomorphe avec les clés de chiffrement associées à chaque terminal client ;
(c) Pour chaque troisième donnée, calcul par ledit module matériel de sécurité d'une pluralité de quatrièmes données correspondant chacune au résultat d'une tentative de déchiffrement homomorphe de la troisième donnée avec chaque clé de déchiffrement associée à un desdits terminaux clients stockée par le module matériel de sécurité, chiffré de manière homomorphe avec une clé de chiffrement associée audit module matériel de sécurité ;
(d) Pour chaque quatrième donnée, calcul par les moyens de traitement de données d'au moins une cinquième donnée correspondant à la différence de ladite quatrième donnée et d'une sixième donnée correspondant à un desdits masques aléatoires chiffré de manière homomorphe avec la clé de chiffrement associée audit module matériel de sécurité ;
(e) Identification par le module matériel de sécurité des cinquièmes données comprenant un bloc de bourrage coïncidant avec ledit bloc de bourrage prédéfini.
(f) Application par les moyens de traitement dans le domaine chiffré d'une fonction correspondant au traitement souhaité à partir des cinquièmes données identifiées.

Selon des caractéristiques avantageuses et non limitatives :
Les clés de chiffrement sont publiques et les clés de déchiffrement sont privées.

Ledit chiffrement homomorphe est de type totalement homomorphe, FHE.

L'étape (a) comprend la génération par des moyens de traitement de données dudit terminal client de la première donnée et sa transmission audit serveur.

L'étape (b) comprend la transmission au module matériel de sécurité dans un ordre aléatoire de la pluralité de troisièmes données ; et l'étape (d) comprend la transmission au module matériel de sécurité (3) dans un ordre aléatoire de la pluralité de cinquièmes données ou des blocs de bourrage de la pluralité de cinquièmes donnée.

La cinquième donnée calculée pour une quatrième donnée correspond à la différence de ladite quatrième donnée et de la sixième donnée correspondant au même masque aléatoire que la deuxième donnée à partir de laquelle cette quatrième donnée a été calculée.

Les étapes (b), (c) et (d) comprennent respectivement le calcul de toutes les troisièmes données possibles, toutes les quatrièmes données possibles, et toutes les cinquièmes données possibles.

L'étape (e) comprend, pour chaque cinquième donnée, la génération par le module matériel de sécurité d'une septième donnée notée ayant une première valeur si la cinquième donnée comprend un bloc de bourrage coïncidant avec ledit bloc de bourrage prédéfini, et une deuxième valeur sinon.

Ladite première valeur de la septième donnée est la valeur 1 chiffrée de manière homomorphe avec la clé de chiffrement associée audit module matériel de sécurité, et la deuxième valeur de la septième donnée est la valeur 0 chiffrée de manière homomorphe avec la clé de chiffrement associée audit module matériel de sécurité.

L'étape (f) comprend, pour chaque première donnée, le calcul d'une huitième donnée correspondant à la somme de chacun des produits d'une cinquième donnée calculée à partir de cette première donnée, sans son bloc de bourrage, par la septième donnée calculée pour cette cinquième donnée.

Ladite fonction correspondant au traitement souhaité est composée d'opérations compatibles avec ledit chiffrement homomorphe, l'étape (f) comprenant l'application de ladite fonction directement aux huitièmes données.

Ledit module matériel de sécurité est une enclave sécurisée des moyens de traitement de données.

L'étape (a) comprend l'obtention d'une pluralité de premières données depuis un sous-ensemble de terminaux clients dudit ensemble de terminaux client, voire tout ledit ensemble de terminaux client.

Le procédé comprend une étape (g) de déchiffrement homomorphe, par le module matériel de sécurité et/ou au moins un des terminaux client, dudit résultat de l'application de la fonction avec la clé de déchiffrement associée au module matériel de sécurité.

Selon un deuxième aspect, l'invention propose un ensemble d'un serveur et d'un module matériel de sécurité pour le traitement sécurisé de données d'entrée, caractérisé en ce que :
- Le serveur comprend des moyens de traitement de données configurés pour :
   ∘ Obtenir, depuis au moins un terminal client d'un ensemble de terminaux client chacun associé à une paire d'une clé de chiffrement et d'une clé de déchiffrement stockée par un module matériel de sécurité connecté auxdits moyens de traitement de données, une première donnée correspondant à une donnée d'entrée dudit terminal client complétée d'un bloc de bourrage prédéfini et chiffrée de manière homomorphe avec la clé de chiffrement associée audit terminal client ;
   ∘ Pour chaque première donnée, calculer une pluralité de troisièmes données correspondant chacune à la somme de ladite première donnée et d'une deuxième donnée correspondant à un élément d'un ensemble de masques aléatoires chiffrés de manière homomorphe avec les clés de chiffrement associées à chaque terminal client ;
   ∘ Pour chaque quatrième donnée, calculer au moins une cinquième donnée correspondant à la différence de ladite quatrième donnée et d'une sixième donnée correspondant à un desdits masques aléatoires chiffré de manière homomorphe avec la clé de chiffrement associée audit module matériel de sécurité ;
   ∘ Appliquer dans le domaine chiffré une fonction correspondant au traitement souhaité à partir de cinquièmes données identifiées.
- Le module matériel de sécurité est configuré pour :
   ∘ Pour chaque troisième donnée, calculer une pluralité de quatrièmes données correspondant chacune au résultat d'une tentative de déchiffrement homomorphe de la troisième donnée avec chaque clé de déchiffrement associée à un desdits terminaux clients stockée par le module matériel de sécurité, chiffré de manière homomorphe avec une clé de chiffrement associée audit module matériel de sécurité ;
   ∘ Pour chaque cinquième donnée, identifier les cinquièmes données comprenant un bloc de bourrage coïncidant avec ledit bloc de bourrage prédéfini.

Selon un troisième et un quatrième aspect, l'invention propose un produit programme d'ordinateur comprenant des instructions de code pour l'exécution d'un procédé selon le premier aspect de traitement sécurisé de données d'entrée ; et un moyen de stockage lisible par un équipement informatique sur lequel est enregistré un produit programme d'ordinateur comprenant des instructions de code pour l'exécution d'un procédé selon le premier aspect de traitement sécurisé de données d'entrée.

### PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1]la figure 1 est un schéma d'un système pour la mise en œuvre du procédé selon l'invention ;
[Fig. 2]la figure 2 est un logigramme illustrant les étapes d'un mode de réalisation du procédé selon l'invention ;
[Fig. 3a]la figure 3a illustre une première partie d'un mode de réalisation du procédé selon l'invention ;
[Fig. 3b]la figure 3b illustre une deuxième partie d'un mode de réalisation du procédé selon l'invention ;
[Fig. 3c]la figure 3c illustre une troisième partie d'un mode de réalisation du procédé selon l'invention ;
[Fig. 3d]la figure 3d illustre une quatrième partie d'un mode de réalisation du procédé selon l'invention.

### DESCRIPTION DÉTAILLÉE

### Architecture

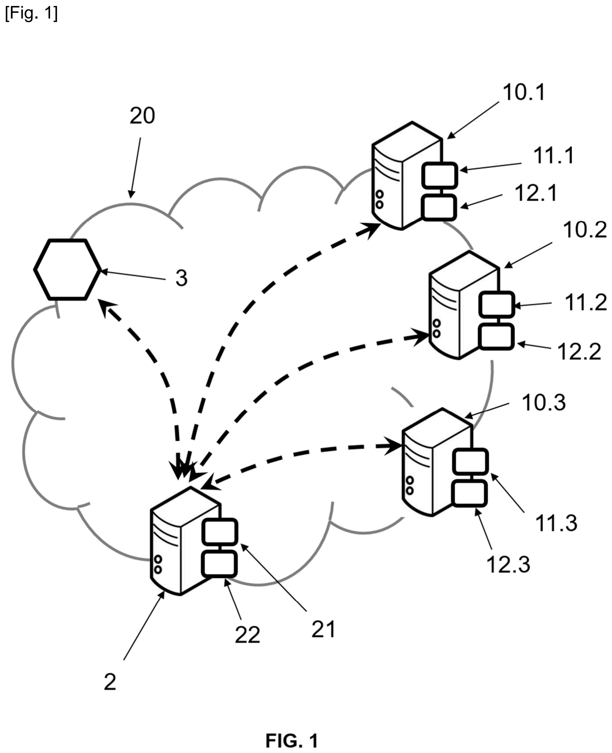

La présente invention concerne un procédé de traitement sécurisé de données d'entrées provenant d'un ensemble de terminaux clients 10.1, 10.2, 10.3 dans un système tel que représenté sur la **figure 1****.**

Ledit traitement est dit sécurisé car comme l'on verra il est mis en œuvre dans le domaine chiffré grâce aux propriétés du chiffrement homomorphe, et en plus il est parfaitement anonyme, ce qui signifie qu'il est impossible de faire le lien entre les données d'entrée et les terminaux 10.1, 10.2, 10.3 dont ils proviennent.

Tout traitement d'intérêt pourra être mis en œuvre par le présent procédé, tel qu'une comparaison entre les données, un traitement statistique, etc.

On suppose qu'on a un ensemble de n>1 terminaux clients 10.1 à 10.3 (3 dans la figure 1), chacun étant un terminal d'un utilisateur au sens large, c'est-à-dire une entité détentrice de données sensibles à traiter, par exemple un hôpital. Chaque terminal client 10.1, 10.2, 10.3 pourra être tout équipement électronique comprenant des moyens de traitement de données 11.1, 11.2, 11.3 tel qu'un processeur et des moyens de stockage de données 12.1, 12.2, 12.3 tels qu'une mémoire. Ainsi dans la figure 1, les trois terminaux sont par exemple les serveurs centraux de trois hôpitaux, et les données d'entrée des données de patients. Il peut être intéressant de mettre en œuvre un traitement impliquant les données de plusieurs hôpitaux, par exemple des calculs statistiques épidémiologiques, mais chaque hôpital veut garder secrètes et anonymes ses données (et ne pas qu'elles soient lisibles par les autres hôpitaux). On ne sera toutefois pas limité à cette configuration.

Par commodité, on prendra le cas général de n terminaux clients numérotés de 1 à n (10.1... 10.n), et on désignera D^{e}ᵢ la donnée d'entrée du i-ème terminal noté 10.i, 0<i≤n, dont on suppose qu'elle est stockée sur les moyens de stockage 12.i du i-ème terminal 10.i. A noter qu'on utilisera dans la suite de la description également les indices j, k et l qui désigneront aussi un entier entre 1 et n.

Chaque terminal client 10.i est connecté à un serveur 2 pour la mise en œuvre du traitement souhaité dans le domaine chiffré, en particulier via un réseau de communication 20 tel que le réseau internet. Il comprend également des moyens de traitement de données 21 et des moyens de stockage de données 22. On suppose que le serveur 2 est celui d'une entité de confiance, et qu'il dispose d'une puissance de calcul élevée pour la mise en œuvre des traitements sécurisés.

Le système comprend en outre un module matériel de sécurité 3 connecté auxdits moyens de traitement de données 21, en anglais « Hardware Security Module » ou simplement HSM. Il s'agit d'un appareil considéré comme inviolable offrant des fonctions cryptographiques, et offrant un espace d'exécution sécurisé appelé TEE (« Trusted Execution Environment ») qui peut être par exemple une carte électronique enfichable sur un ordinateur ou un dispositif externe spécifique, potentiellement lui aussi connecté au serveur 2 par le réseau 20, mais également une enclave sécurisée d'un processeur et notamment des moyens 21 (par exemple de type SGX), i.e. le module 3 peut lui-même faire partie du serveur 2. De manière classique le module 3 comprend une zone de stockage de données dédiée.

Le présent procédé est mis en œuvre par les moyens de traitement de données 21 du serveur 2 ainsi que le module 3, qui se partagent les étapes.

On suppose par ailleurs que :
- chaque terminal client 10.i est associé à une paire d'une clé de chiffrement et d'une clé de déchiffrement d'un même cryptosystème homomorphe
- le module matériel de sécurité 3 est lui-même associé à une paire d'une clé de chiffrement et d'une clé de déchiffrement du cryptosystème homomorphe, dites clés communes.

On a donc n+1 paires de clés (n terminaux et le module matériel de sécurité). On notera par commodité [.]ᵢ une donnée chiffrée de manière homomorphe en utilisant la clé de chiffrement du i-ème terminal 10.i, et [.]* une donnée chiffrée de manière homomorphe en utilisant la clé de chiffrement du module 3. Similairement, on a Decᵢ ou Dec* le résultat d'une tentative de déchiffrement d'une donnée avec la clé de déchiffrement du i-ème terminal 10.i/du module 3. Par construction du cryptosystème, on a Decⱼ([x]ᵢ)=x si et seulement si i=j. On note qu'on parle de « tentatives » de déchiffrement dans la mesure où l'on peut toujours tenter d'appliquer une clé de déchiffrement à une donnée chiffrée avec une clé d'une autre paire, mais le résultat sera une donnée brouillée (indiscernable d'une donnée aléatoire, et qui ne contient plus d'information, et donc à partir de laquelle on ne peut plus rien retrouver), et on notera $ toute donnée brouillée quelle que soit la valeur réelle de cette donnée. Ainsi Decⱼ([x]ᵢ)=$ si i≠j, et de même [$]i=$ ou Deci($)=$ (pour tout i, y compris *).

On note que les n clés des terminaux sont indépendantes, ainsi que les clés du module : cette dernière n'a pas besoin d'être construite à partir des autres clés comme c'était parfois nécessaire dans l'état de l'art.

De manière préférée et connue, ledit cryptosystème est asymétrique, i.e. les clés de chiffrement sont publiques (et donc potentiellement connues de tous les équipements 10.1, 10.2, 10.3, 2, 3) mais les clés de déchiffrement sont privées.

Alors, dans ce cas, on suppose que le module matériel de sécurité 3 stocke chaque clé de déchiffrement (celles des n terminaux 10.i et la sienne). On rappelle que le module matériel de sécurité 3 est considéré inviolable et honnête de sorte qu'il n'y a pas de problème à lui confier les clés.

A noter qu'à part lui, chaque terminal 10.i dispose bien entendu de sa clé de déchiffrement propre (stockée sur ses moyens de stockage 12.i) pour notamment déchiffrer des résultats de traitements dans le domaine chiffré selon des techniques connues qui n'impliqueraient que lui, et éventuellement la clé de déchiffrement du module 3 pour déchiffrer le résultat du traitement.

En revanche, on suppose que le serveur 2 (ou du moins la partie non sécurisée des moyens de traitement 21) n'a accès à aucune des clés de déchiffrement.

On pourra utiliser n'importe quel cryptosystème au moins partiellement homomorphe vis-à-vis de l'addition, même si le chiffrement totalement homomorphe (FHE, « Fully Homomorphic Encryption ») est préféré. Par exemple, on a les cryptosystèmes RSA qui sont partiellement homomorphes, Boneh-Goh-Nissim presque complètement homomorphe, ou Brakerski-Gentry-Vaikuntanathan (BGV), Cheon-Kim-Kim-Son (CKKS), Fast Fully Homomorphic Encryption Over the Torus (TFHE) ou encore Brakerski-Fan-Vercauteren (BFV) qui sont totalement homomorphes.

On suppose que le traitement souhaité des données d'entrée est défini par une fonction f composée d'opérations compatibles avec le cryptosystème homomorphe choisi, par exemple une fonction linéaire si le cryptosystème est homomorphe vis-à-vis de l'addition, un polynôme si le cryptosystème est homomorphe vis-à-vis de l'addition et la multiplication, etc. Dans le cas d'un cryptosystème FHE, toute fonction f pourrait théoriquement être appliquée.

### Procédé

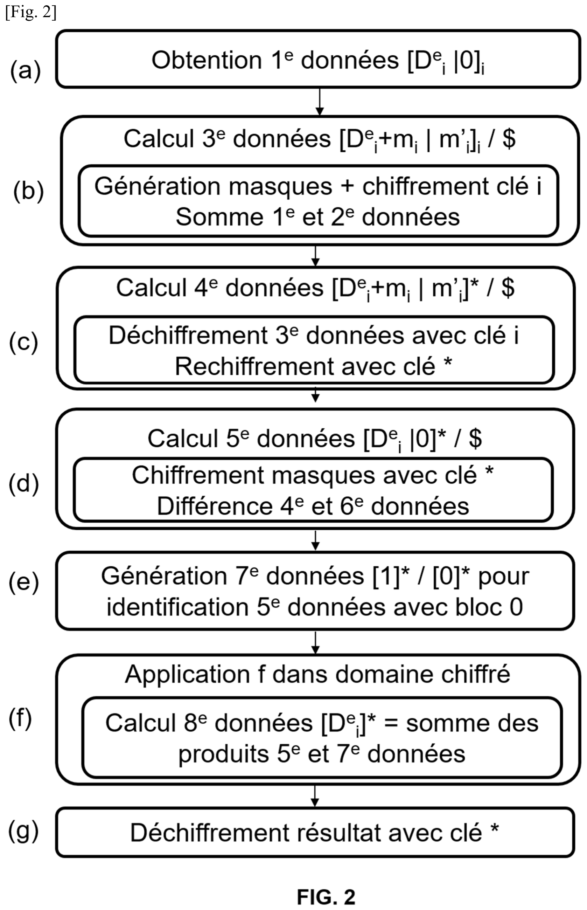

En référence à la **figure 2****,** le présent procédé commence par une étape (a) d'obtention par les moyens de traitement de données 21 du serveur 2, depuis au moins un terminal client 10.i dudit ensemble de terminaux client 10.1, 10.2, 10.3, d'une première donnée correspondant à une donnée d'entrée dudit terminal client 10.i complétée d'un bloc de bourrage prédéfini et chiffrée de manière homomorphe avec la clé de chiffrement associée audit terminal client 10.1, 10.2, 10.3.

Le serveur 2 obtient la première donnée au moins pour un terminal client, préférentiellement une pluralité de terminaux clients (i.e. un sous-ensemble de l'ensemble des terminaux clients) voire tous les terminaux clients 10.1, 10.2, 10.3.

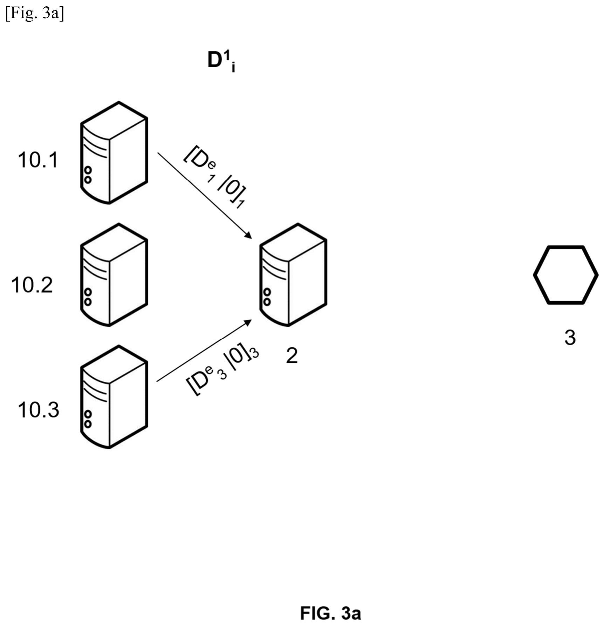

Cette étape (a) est plus spécifiquement illustrée par la **figure 3a****,** dans laquelle ledit sous-ensemble comprend les terminaux 10.1 et 10.3, mais pas le 10.2. On note m≤n le nombre de terminaux dudit sous-ensemble et M ⊆ [1 ;n] l'ensemble des indices des terminaux ayant fourni une première donnée. On notera D¹ᵢ, i∈M, la première donnée obtenue pour le i-ème terminal 10.i.

L'étape (a) comprend avantageusement la génération, par les moyens de traitement de données 11.i dudit terminal client 10.i, de sa première donnée D¹ᵢ, et sa transmission audit serveur 2.

Pour ce faire, le terminal client 10.1 part de sa donnée d'entrée D^{e}ᵢ et la complète d'un bloc de bourrage prédéfini, ce qu'on appelle un « padding ». Le bloc est prédéfini, c'est-à-dire que c'est le même bloc qui est ajouté (concaténé) à chaque donnée d'entrée, par exemple un certain nombre de zéros. L'homme du métier pourra par exemple se référer au document *Lightweight FHE-based protocols achieving results consistency for data encrypted under different keys, Marina Checri, Jean-Paul Bultel, Renaud Sirdey, Aymen Boudguiga,* qui décrit un tel padding.

On notera par commodité D^{e}ᵢ |0 la donnée d'entrée complétée du bloc de bourrage, mais on comprendra qu'on n'est pas limité au cas de zéros et que tout bloc arbitraire pourrait être utilisé pour le bourrage.

Cette donnée est alors chiffrée de manière homomorphe avec la clé de chiffrement associée audit terminal 10.i, i.e. chaque terminal chiffre la donnée D^{e}ᵢ |0 qu'il a construite avec sa propre clé.

On obtient m premières données D¹ᵢ = [D^{e}ᵢ |0]ᵢ, i∈M, en l'espèce [D^{e}₁ |0]₁ et [D^{e}₃ |0]₃ dans la figure 3a.

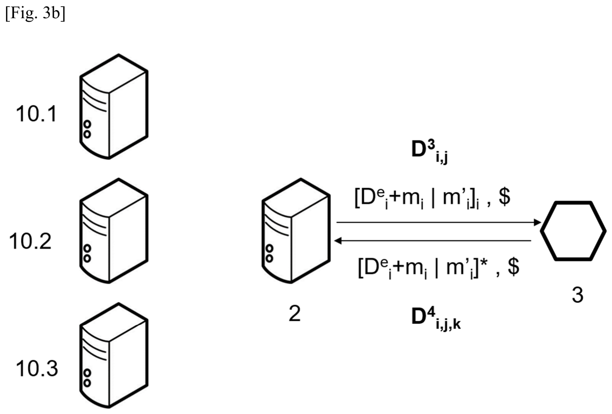

Ensuite, dans une étape (b), plus spécifiquement illustrée par la **figure 3b****,** pour chaque première donnée, les moyens de traitement de données 21 calculent une pluralité de troisièmes données correspondant chacune à la somme de ladite première donnée et d'une deuxième donnée correspondant à un élément d'un ensemble de masques aléatoires chiffrés de manière homomorphe avec les clés de chiffrement associées à chaque terminal client 10.1, 10.2, 10.3, dit premier ensemble par commodité. Il s'agit de masques additifs jetables classiques en cryptographie.

On a avantageusement un masque, et donc une deuxième donnée, pour chaque terminal client 10.1, 10.2, 10.3 dudit ensemble, et ainsi jusqu'à n troisièmes données générées pour chaque première donnée soit jusqu'à m*n au total.

L'étape (b) commence avantageusement par la génération par les moyens 21 dudit ensemble de masques aléatoires chiffrés (de sorte à avoir un nouvel ensemble de masques à chaque mise en œuvre du procédé pour éviter les rejeux), bien que cet ensemble puisse être généré antérieurement, avec par exemple n masques prélevés aléatoirement dans un grand ensemble de masques. L'étape (b) peut également comprendre en anticipation de l'étape (d) la génération d'un autre ensemble (dit deuxième ensemble) des mêmes masques aléatoires chiffrés de manière homomorphe cette fois avec la clé de chiffrement commune, voir plus loin.

De manière préférée, chaque masque aléatoire comprend une première partie de masque de même taille que les données d'entrée, et une deuxième partie de masque de même taille que le bloc de bourrage prédéterminé. Chaque partie peut être générée aléatoirement et les deux parties concaténées pour obtenir le masque complet (ou la combinaison des deux générée d'un coup).

On note D²ⱼ, 0<j≤n, la deuxième donnée générée pour le j-ème terminal 10.j, mⱼ la première partie de masque et m'ⱼ la deuxième partie de masque pour le j-ème terminal 10.j, soit un masque mⱼ|m'ⱼ.

Comme la première donnée, chaque masque aléatoire généré pour un terminal 10.j est chiffré de manière homomorphe avec la clé de chiffrement associée audit terminal 10.j, i.e. les moyens 21 chiffrent chaque donnée mⱼ|m'ⱼ qu'ils ont construit avec la clé du j-ème terminal 10.j (on rappelle que les clés de chiffrement sont publiques, de sorte qu'il n'y a pas de problème pour que ce chiffrement soit réalisé par le serveur 2 plutôt que le terminal 10.j).

On obtient n deuxièmes données D²ⱼ = [mⱼ|m'ⱼ]ⱼ, 0<j≤n, avec ledit premier ensemble exprimé comme {[mⱼ|m'ⱼ]ⱼ}0<j≤n et le deuxième ensemble exprimé comme {[mⱼ|m'ⱼ]*}0<j≤n.

Une troisième donnée notée D³_{i,j} est simplement la somme d'une première donnée D¹ᵢ et d'une deuxième donnée D²ⱼ., i.e. D³_{i,j} = D¹ᵢ + D²ⱼ = [D^{e}ᵢ |0]ᵢ + [mⱼ|m'ⱼ]ⱼ = [D^{e}ᵢ+mᵢ | m'ᵢ]ᵢ si i=j du fait de la compatibilité du chiffrement homomorphe avec l'addition et $ sinon car il sera impossible de déchiffrer une donnée chiffrée partiellement avec deux clés.

Comme expliqué, de manière préférée l'étape (b) comprend la génération de toutes les sommes possibles, i.e. pour chaque première donnée et chaque deuxième données (∀i,j ∈Mx[1,n]), soit un total de m*n troisièmes données. On note que seules les m D³_{i,i} telles que i=j doivent nécessairement être générées, les autres sont optionnelles. Mais plus de troisièmes données sont générées, plus le procédé sera sécurisé (car les données exploitables seront noyées dans les données brouillées - au mieux on a alors m troisièmes données encore exploitables de la forme [D^{e}ᵢ+mᵢ | m'ᵢ]ᵢ et m(n-1) troisièmes données brouillées $).

L'étape (b) comprend avantageusement la transmission desdites troisièmes données au module matériel de sécurité 3, préférentiellement dans un ordre aléatoire.

On remarque que :
- le module 3 ne peut pas distinguer les troisièmes données qui contiennent les données d'entrées de celles brouillées ($) ;
- et même en tentant de toutes les déchiffrer, à chaque fois les données d'entrées sont masquées ;
- il est impossible de savoir à quel terminal 10.i est associé chaque troisième donnée.

La sécurité et l'anonymat sont donc parfaitement préservés et le module comme le serveur ne peut travailler que « à l'aveugle ». Pourtant, comme l'on va voir, il va quand même être possible de mettre en œuvre le traitement souhaité.

Ainsi, le procédé comprend alors en réponse une étape (c), à nouveau illustrée par la figure 3b, de calcul par ledit module matériel de sécurité 3, pour chaque troisième donnée, d'une pluralité de quatrièmes données correspondant chacune au résultat d'une tentative de transchiffrement homomorphe de la troisième donnée avec la clé de chiffrement associée audit module matériel de sécurité 3, i.e. la clé de chiffrement commune, en supposant successivement la troisième donnée chiffrée avec chaque clé de chiffrement associée à un desdits terminaux clients 10.1, 10.2, 10.3.

Par transchiffrement on entend de manière connue le fait de « changer de clé de chiffrement » en pratique de sorte à aboutir à un chiffrement avec la clé commune, mais il est important de comprendre qu'ici c'est seulement une tentative de transchiffrement, dans la mesure où le module matériel de sécurité 3 ne sait pas exactement avec quelle clé de chiffrement (i.e. avec celle de quel terminal client 10.1, 10.2, 10.3) chaque troisième donnée a été chiffrée. C'est pourquoi, de manière particulièrement originale et astucieuse, chaque transchiffrement est effectué « en supposant successivement la troisième donnée chiffrée avec plusieurs clés de chiffrement associées à un desdits terminaux clients 10.1, 10.2, 10.3 », c'est-à-dire à l'aveugle, en considérant délibérément diverses clés de chiffrement utilisées, y compris donc au moins une clé différente de celle en pratique utilisée.

Bien entendu le transchiffrement ne peut marcher que si la supposition est correcte, i.e. que la bonne clé de chiffrement est considérée. Si on au contraire, pour une troisième donnée effectivement chiffrée avec une clé A, le module 3 suppose de manière erronée qu'elle a été chiffrée avec une clé B, le transchiffrement avec la clé de chiffrement commune ne va produire que du bruit (donnée brouillée), d'où à nouveau l'emploi du terme « tentative » de transchiffrement.

On comprend qu'on calcule pour une troisième donnée plusieurs quatrièmes données en supposant successivement plusieurs clés de chiffrement, c'est-à-dire que les différentes quatrièmes données correspondent respectivement aux différentes hypothèses de clé de chiffrement utilisées, dont au moins une hypothèse correcte (transchiffrement avec succès de la troisième donnée en supposant la troisième donnée chiffrée avec la clé de chiffrement effectivement utilisée pour l'obtention de cette troisième donnée à l'étape (b)) et une hypothèse incorrecte (tentative de transchiffrement de la troisième donnée en supposant la troisième donnée chiffrée avec une clé de chiffrement différente de celle effectivement utilisée pour l'obtention de cette troisième donnée à l'étape (b) - en pratique échec du transchiffrement)

Une façon simple et préférée de réaliser ce transchiffrement est un déchiffrement puis nouveau chiffrement. Alors l'étape (c) est plus précisément une étape de calcul par ledit module matériel de sécurité 3, pour chaque troisième donnée, d'une pluralité de quatrièmes données correspondant chacune au résultat d'une tentative de déchiffrement homomorphe de la troisième donnée avec chaque clé de déchiffrement stockée par le module matériel de sécurité 3, lui-même chiffré de manière homomorphe avec la clé de chiffrement associée audit module matériel de sécurité 3, i.e. la clé de chiffrement commune.

En d'autres termes, l'étape (c) comprend dans ce mode préféré pour chaque troisième donnée un déchiffrement (avec une des clés de déchiffrement associées aux terminaux 10.1, 10.2, 10.3, dont on rappelle qu'elles sont stockées par le module 3) puis un chiffrement (avec sa clé de chiffrement, qui est publique ou du moins stockée par le module 3).

On note D⁴_{i,j,k}, 0<k≤n, la quatrième donnée générée en utilisant la clé de déchiffrement du k-ème terminal 10.k.

D⁴_{i,j,k} = [Decₖ(D³_{i,j})]* = [D^{e}ᵢ+mᵢ | m'ᵢ]* si et seulement si i=j=k. En effet, si i≠j on a déjà D³_{i,j} = $ et donc D⁴_{i,j,k} = $ quel que soit k, et si i=j mais i≠k on déchiffre [D^{e}ᵢ+mᵢ | m'ᵢ]ᵢ avec la mauvaise clé de sorte que le résultat est encore $.

Alternativement, le transchiffrement peut être direct, sans déchiffrement explicite des troisièmes données, i.e. sans repasser dans l'espace des clairs. En d'autres termes, le module 3 calcule directement D⁴_{i,j,k} à partir de D³_{i,j}, sans calculer Decₖ(D³_{i,j}). On connait à ce titre des techniques dites de rechiffrement, notamment par procuration, en anglais proxy re-encryption (PRE), dans lesquelles le module 3 n'a pas besoin d'utiliser la clé de déchiffrement.

A noter que le mode de réalisation déchiffrement puis nouveau chiffrement est préféré car :
- cette technique ne nécessite pas de puissance de calcul elevée ;
- le module matériel de sécurité 3 dispose des clés de déchiffrement associées associée à un desdits terminaux clients 10.1, 10.2, 10.3, les techniques de PRE étant justement prévues pour éviter de les confier au proxy ;
- le déchiffrement ne pose pas de problème de confidentialité, car on répète que les données correctes sont masquées et noyées au milieu des données brouillées.

De manière préférée l'étape (c) comprend tous les transchiffrements possibles, i.e. pour chaque troisième donnée n quatrièmes données sont générées (une pour la clé de déchiffrement de chaque terminal 10.1, 10.2, 10.3 : ∀k ∈[1,n]), soit un total de jusqu'à m*n² quatrièmes données.

Parmi celles-ci, si toutes les troisièmes données possibles avaient été générées on a alors m quatrièmes données encore exploitables de la forme [D^{e}ᵢ+mᵢ | m'ᵢ]* et m(n²-1) quatrièmes données brouillées $.

L'étape (c) comprend avantageusement la retransmission desdites quatrièmes données au serveur 2.

A ce stade, le serveur 2 dispose théoriquement de toutes les données d'entrée chiffrées de manière homomorphe sous clé commune (la clé de chiffrement du module 3), mais masquées et noyées au milieu des données brouillées.

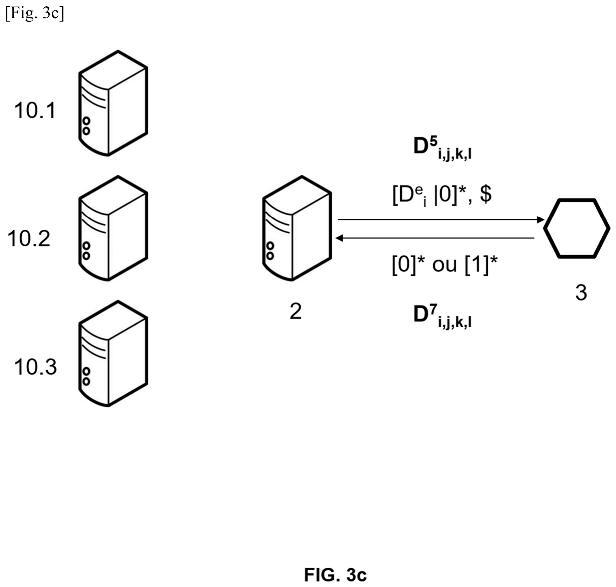

Dans une étape (d) astucieuse, plus spécifiquement illustrée par la **figure 3c****,** pour chaque quatrième donnée, les moyens de traitement de données 21 calculent au moins une cinquième donnée correspondant à la différence de ladite quatrième donnée et d'une sixième donnée correspondant à un desdits masques aléatoires chiffré de manière homomorphe avec la clé de chiffrement associée audit module matériel de sécurité 3.

Cette étape (d) est le pendant de l'étape (b), la différence est que les masques sont chiffrés avec la clé commune et que l'on fait une différence au lieu d'une somme. On comprend ainsi qu'on utilise le deuxième ensemble évoqué avant, et que chaque sixième donnée correspond à un élément dudit deuxième ensemble.

De manière avantageuse on a une sixième donnée pour chaque masque (i.e. une sixième donnée pour chaque deuxième donnée), et donc préférentiellement à nouveau une pour chaque terminal client 10.1, 10.2, 10.3 dudit ensemble.

Selon une première variante, la cinquième donnée calculée pour une quatrième donnée correspond à la différence de ladite quatrième donnée et de la sixième donnée correspondant au même masque aléatoire que la deuxième donnée à partir de laquelle cette quatrième donnée a été calculée. Pour reformuler, pour chaque quatrième donnée, les moyens de traitement de données 21 calculent à l'étape (d) exactement une cinquième donnée correspondant à la différence de ladite quatrième donnée et de la sixième donnée correspondant audit masque aléatoire associé à la deuxième donnée utilisée dans le calcul de cette quatrième donnée, cette fois chiffré de manière homomorphe avec la clé de chiffrement associée audit module matériel de sécurité 3.

En effet, si aucune permutation aléatoire n'a été encore mise en œuvre à ce stade (lesdites troisièmes données n'ont pas été transmises au module matériel de sécurité 3 dans un ordre aléatoire), les moyens 21 peuvent faire le lien entre les troisièmes données et les quatrièmes données et il suffit de retirer le bon masque à chaque quatrième donnée, i.e. on a autant de cinquièmes données obtenues que de quatrièmes données (m*n²).

Selon une deuxième variante, l'étape (d) comprend le calcul d'une pluralité de cinquièmes données correspondant à toutes les différences possibles de ladite quatrième donnée et d'une sixième donnée correspondant à un de ladite pluralité de masques aléatoires chiffré de manière homomorphe avec la clé de chiffrement associée audit module matériel de sécurité 3 (i.e. chaque élément du deuxième ensemble).

En effet, si en particulier on a eu une permutation aléatoire et donc que les moyens ont perdu le lien avec les troisièmes données d'origine, on calcule toutes les différences possibles et ainsi jusqu'à n sixièmes données générées pour chaque quatrième donnée soit jusqu'à m*n³ au total. On peut même le faire en l'absence de permutation aléatoire juste pour augmenter le nombre de données brouillées.

L'étape (d) commence avantageusement par la génération par les moyens 21 desdites sixièmes données (le deuxième ensemble), qui peuvent alternativement être générées en même temps que les deuxièmes données (à l'étape (b)), voire antérieurement.

On note D⁶ₗ, 0<l≤n, la sixième donnée générée pour le l-ème terminal 10.l, avec à nouveau mₗ la première partie de masque et m'ₗ la deuxième partie de masque pour le l-ème terminal 10.l, soit un masque mₗ|m'ₗ. On rappelle qu'il s'agit bien des mêmes masques qu'à l'étape (b).

Comme la quatrième donnée, chaque masque aléatoire généré pour un terminal 10.l est chiffré de manière homomorphe avec la clé de chiffrement commune, c'est-à-dire celle associée audit module 3, i.e. les moyens 21 chiffrent chaque donnée mₗ|m'ₗ qu'ils ont construite avec la clé du module 3 (on rappelle que les clés de chiffrement sont publiques).

On obtient n sixièmes données D⁶ₗ = [mₗ|m'ₗ]*, 0<l≤n. Comme expliqué, si les moyens 21 savent faire le lien avec les troisièmes données on peut pour chaque quatrième donnée D⁴_{i,j,k} utiliser l'unique sixième donnée D⁶ⱼ = [mⱼ|m'ⱼ]*, i.e. prendre l=j.

Une cinquième donnée notée D⁵_{i,j,k,l} est simplement la différence d'une quatrième donnée D⁴_{i,j,k} et d'une sixième donnée D⁶ₗ., i.e. D⁵_{i,j,k,l} = D⁴_{i,j,k} - D⁶ₗ = [D^{e}ᵢ+mᵢ | m'ᵢ]* - [mⱼ|m'ⱼ]* = [D^{e}ᵢ |0]* si i=j=k=l du fait de la compatibilité du chiffrement homomorphe avec l'addition, et $ sinon car :
- soit déjà D⁴_{i,j,k} = $
- soit, si l'on calcule toutes les différences, i=j=k mais i≠l, et alors on mélange des masques, i.e. D⁵_{i,j,k,l} = [D²ᵢ+mᵢ | m'ᵢ]* - [mₗ|m'ₗ]* = [D^{e}ᵢ+mₗ-mₗ | m'ᵢ-m'ₗ]* = $ car mᵢ≠mₗ et m'ᵢ≠m'ₗ du fait de leur tirage aléatoire.

Si toutes les quatrièmes données possibles avaient été générées on récupère alors les m cinquièmes données de la forme [D^{e}ᵢ|0]* correspondant aux m données d'entrée chiffrées sous clé commune au lieu de leurs clés spécifiques et jusqu'à m(n³-1) quatrièmes données brouillées $ si on a calculé n cinquièmes données par quatrième donnée.

L'étape (d) comprend avantageusement la transmission desdites cinquièmes données au module matériel de sécurité 3, préférentiellement encore dans un ordre aléatoire.

Comme à l'issue de l'étape (b), on remarque que :
- le module 3 ne peut pas distinguer les cinquièmes données qui contiennent les données d'entrées de celles brouillées ($) ;
- si elles sont transmises (et cela reste optionnel, voir juste après), les données d'entrées ne sont plus masquées mais noyées au milieu d'un très grand nombre de données brouillées dont l'ordre a été mélangé plusieurs fois de sorte qu'il n'est statistiquement pas possible de les retrouver ;
- il est toujours impossible de savoir à quel terminal 10.i est associé chaque cinquième donnée.

Alternativement l'étape (d) peut comprendre seulement la transmission des blocs de bourrage desdites cinquièmes données au module matériel de sécurité 3, préférentiellement encore dans un ordre aléatoire, ce qui rend même complètement impossible toute lecture en clair des données d'entrées par le module 3.

Dans une étape (e), le module 3 va pouvoir « trier » les cinquièmes données exploitables de celles brouillées, tout en conservant l'anonymat. En effet, à ce stade, les données d'entrée sont bien chiffrées sous la même clé, leur traitement dans le domaine chiffré devient donc possible, mais il faut les retrouver au milieu des données brouillées.

Plus précisément, dans l'étape (e), pour chaque cinquième donnée, le module matériel de sécurité 3 identifie celles des cinquièmes données comprenant un bloc de bourrage coïncidant avec ledit bloc de bourrage prédéfini (en d'autres termes terminées par des bits qui sont les mêmes que ceux dudit bloc prédéfini, par exemple un certain nombre de zéros).

Cette étape (e) comprend généralement le déchiffrement de manière homomorphe des données reçues (soit les cinquièmes données entières, soit juste leurs blocs de bourrage) en utilisant la clé de déchiffrement du module 3 (qui n'est connue que de ce dernier - ainsi qu'éventuellement des terminaux clients 10.1, 10.2, 10.3, mais qui reste privée et en tout cas pas connue du serveur 2).

L'étape (e) peut ensuite être mise en œuvre de nombreuses façons :
- si seulement les blocs de bourrage ont été transmis, il suffit de comparer directement le résultat du déchiffrement avec le bloc attendu, par exemple une séquence de zéros. Pour toute donnée brouillée $, le résultat sera différent (avec une probabilité d'erreur égale à ½^(nombre de zéros), rapidement infime) ;
- Si les cinquièmes données ont été transmises, on peut déchiffrer puis extraire le bloc de bourrage ;
- Ensuite, selon un premier mode de réalisation, le module 3 génère pour chaque cinquième donnée une septième donnée notée D⁷_{i,j,k,l} (on a ainsi le même nombre de septièmes données que de cinquièmes données, soit jusqu'à m*n³) ayant une première valeur si la cinquième donnée comprend un bloc de bourrage coïncidant avec ledit bloc de bourrage prédéfini, et une deuxième valeur sinon. Conformément à la figure 3c, ce sont préférentiellement deux bits chiffrés, en d'autres termes la première valeur est préférentiellement 1 chiffré de manière homomorphe avec la clé de chiffrement du module 3 (i.e. [1]*), et la deuxième valeur est préférentiellement 0 chiffré de manière homomorphe avec la clé de chiffrement du module 3 (i.e. [0]*), qui facilitent les calculs, même si on pourra utiliser toute autre paire de valeurs différentes. Pour résumer, dans le mode préféré on a D⁷_{i,j,k,l} = [1]* si D⁵_{i,j,k,l} = [D^{e}ᵢ [0]* (ce qui est le cas si et seulement si i=j=k=l) et D⁷_{i,j,k,l} = [0]* si D⁵_{i,j,k,l} = $ (les autres cas). L'étape (e) comprend alors avantageusement la retransmission de toutes les septièmes données au serveur 2.
- Selon un deuxième mode de réalisation, en particulier si les cinquièmes données entières ont été transmises, le module 3 renvoie simplement au serveur 2 l'ensemble des cinquièmes données identifiées comme comprenant un bloc de bourrage coïncidant avec ledit bloc de bourrage prédéfini (au nombre de m), entières ou directement privées de leur bloc de bourrage (i.e. la partie gauche - le module 3 peut simplement séparer les parties gauche et droite de chaque cinquième donnée et renvoyer les parties gauche chiffrées sous la clé commune [D^{e}ᵢ]* lorsque la partie droite coïncide avec le bloc de bourrage pré terminé). Les autres (les $) ne sont pas renvoyées. On note toutefois que le premier mode de réalisation permet de maintenir la protection par la masse de données, puisqu'on a m*n³ septièmes données qui sont transmises dont l'essentiel est du brouillage.

A noter qu'on peut se demander si le nombre d'opérations mises en œuvre par le module matériel de sécurité 3 n'est pas trop lourd, celui-ci étant en O(n⁴). Cependant en pratique, la valeur de n reste toujours basse (de l'ordre de la dizaine ou au pire de la centaine) car on rappelle qu'elle désigne le nombre d'entités désirant mettre en œuvre des traitements sécurisés commun, par exemple un groupement d'hôpitaux. Ainsi, une complexité en O(n⁴) n'est absolument pas problématique, au vu des avantages conférés en termes de sécurité et d'anonymat.

Enfin, le procédé comprend une étape (f) d'application par les moyens de traitement 21 dans le domaine chiffré d'une fonction correspondant au traitement souhaité sur les cinquièmes données identifiées.

On rappelle que le traitement souhaité est défini par une fonction notée f, et on cherche à appliquer f aux données d'entrée D^{e}ᵢ. L'étape (f) consiste à évaluer homomorphiquement f sur les [D^{e}ᵢ]*, c'est-à-dire dans le domaine chiffré et non sur les données en clair, dont ne dispose pas le serveur 2 : du fait des propriétés du chiffrement homomorphe, on a f([D^{e}₁]*,[D^{e}₂]*,... [D^{e}ₘ]*)= [f(D^{e}₁,D^{e}₂,... D^{e}ₘ)]*. A noter que ce traitement peut être complexe d'un point de vue calculatoire, mais le serveur 2 peut être choisi pour les performances de ses moyens 21, sans risque de sécurité puisqu'il travaille dans le domaine chiffré et ne dispose d'aucune clé de déchiffrement. On obtient une donnée qu'on appellera neuvième donnée par commodité, qui est donc en pratique le chiffré du résultat attendu.

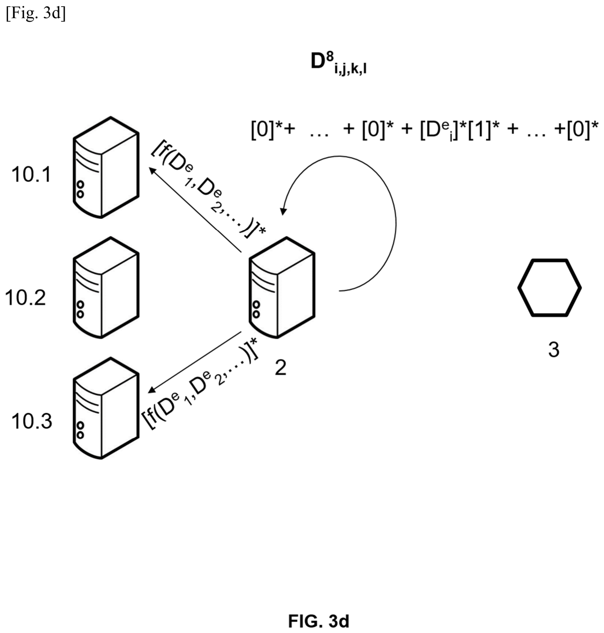

L'étape (f) peut être mise en œuvre de nombreuses façons différentes selon la nature de l'étape (e) :
- si le module 3 a directement renvoyé les cinquièmes données identifiées comme comprenant un bloc de bourrage coïncidant avec ledit bloc de bourrage prédéfini, voire juste leurs parties gauche, ces dernières peuvent être extraites/directement injectées dans la fonction f.
- si le module 3 a renvoyé pour chaque cinquième donnée une première ou deuxième valeur selon si la cinquième donnée comprend un bloc de bourrage coïncidant avec ledit bloc de bourrage prédéfini, il suffit de prendre les parties gauche des cinquièmes valeurs pour lesquelles la première valeur a été renvoyée
- une façon très astucieuse de mettre en œuvre cette dernière action lorsque la première valeur est [1]* et la deuxième valeur est [0]* et lorsque le chiffrement homomorphe est compatible avec la multiplication, est comme illustré par la **figure 3d** simplement de calculer pour chaque première donnée (i.e. pour chaque donnée d'entrée, c'est-à-dire pour chaque terminal client 10.i) une huitième donnée (soit m au total) correspondant à la somme des produits de chaque cinquième donnée sans son bloc de bourrage (la partie gauche) par la septième donnée correspondante (celle renvoyée pour cette cinquième donnée).
   En effet, [D^{e}ᵢ]*[1]* = [D^{e}ᵢ x 1]* = [D^{e}ᵢ]* et [$]*[0]* = [$ x 0]* = [0]* du fait des propriétés de chiffrement homomorphe.
   Mathématiquement en notant D⁸ᵢ la huitième donnée, on a D⁸ᵢ = ΣjΣkΣl (D⁷_{i,j,k,l} x gauche(D⁵_{i,j,k,l})), chaque terme étant égal soit à [D^{e}ᵢ]* si i=j=k=l (car alors D⁷_{i,j,k,l} = [1]*) et [0]* sinon (car alors D⁷_{i,j,k,l} = [0]*), de sorte que D⁸ᵢ = [0]*+ [0]*+ ... + [0]* + [D^{e}ᵢ]* + [0]* + ... +[0]* = [D^{e}ᵢ]*
   Il suffit alors de calculer f(D⁸₁, D⁸₂, ... D⁸ₘ) = f([D^{e}₁]*,[D^{e}₂]*,... [D^{e}ₘ]*) = [f(D^{e}₁,D^{e}₂,... D^{e}ₘ)]*, qui est ladite neuvième donnée.

On remarque qu'à ce stade, la neuvième donnée est encore dans le domaine chiffré, elle peut être transmis librement sans risque de divulgation de données confidentielles.

Ainsi le procédé comprend avantageusement une étape (g) de déchiffrement homomorphe dudit résultat de l'application de la fonction (la neuvième donnée) par un détenteur de la clé de déchiffrement associée au module matériel de sécurité 3, soit par le module matériel de sécurité 3 lui-même, soit par exemple par un des terminaux client 10.1, 10.2, 10.3 si cette clé de déchiffrement leur a été confiée le cas échéant avec retransmission du résultat (cas représenté par la figure 3d), de sorte à obtenir f(D^{e}₁,D^{e}₂,... D^{e}ₘ) en clair. On ne sera limité à aucune utilisation spécifique.

A noter que l'étape (g) peut comprendre en outre l'application d'une fonction complémentaire f' au résultat de déchiffrement par exemple pour un traitement plus complexe, notamment non-linéaire, si la fonction complémentaire comprend des opérations non compatibles avec le cryptosystème homomorphe.

### Serveur

Selon un deuxième aspect, l'invention concerne l'ensemble du serveur 2 et du module matériel de sécurité 3 pour la mise en œuvre du procédé selon le premier aspect.

Comme expliqué, le serveur 2 comprend des moyens de traitement de données 21 et des moyens de stockage de donnes 22 (pouvant stocker en particulier les clés de chiffrement homomorphe des terminaux 10.1, 10.2, 10.3 et du module 3 - on rappelle que ces clés sont généralement publiques, mais généralement aucune clé de déchiffrement). Le module 3 stocke quant à lui toutes les clés de déchiffrement.

Le module matériel de sécurité 3 peut en pratique être intégré au serveur 2 voir être une enclave sécurisée des moyens de traitement 21.

Le serveur 2 et/ou le module 3 sont préférentiellement connectés aux terminaux 10.1, 10.2, 10.3 par exemple via un réseau 20 tel qu'internet.

Les moyens de traitement de données 21 sont configurés pour mettre en œuvre des étapes consistant à :
- Obtenir, depuis au moins un terminal client d'un ensemble de terminaux client 10.1, 10.2, 10.3 chacun associé à une paire d'une clé de chiffrement et d'une clé de déchiffrement stockée par un module matériel de sécurité 3 connecté auxdits moyens de traitement de données 21, une première donnée correspondant à une donnée d'entrée dudit terminal client 10.1, 10.2, 10.3 complétée d'un bloc de bourrage prédéfini et chiffrée de manière homomorphe avec la clé de chiffrement associée audit terminal client 10.1, 10.2, 10.3 ;
- Pour chaque première donnée, calculer une pluralité de troisièmes données correspondant chacune à la somme de ladite première donnée et d'une deuxième donnée correspondant à un élément d'un ensemble de masques aléatoires chiffrés de manière homomorphe avec les clés de chiffrement associées à chaque terminal client 10.1, 10.2, 10.3 ;
- Pour chaque quatrième donnée, calculer au moins une cinquième donnée correspondant à la différence de ladite quatrième donnée et d'une sixième donnée correspondant à un desdits masques aléatoires chiffré de manière homomorphe avec la clé de chiffrement associée audit module matériel de sécurité 3 ;
- Appliquer dans le domaine chiffré une fonction correspondant au traitement souhaité à partir de cinquièmes données identifiées.

Le module 3 est configuré pour mettre en œuvre des étapes consistant à :
- Pour chaque troisième donnée, calculer une pluralité de quatrièmes données correspondant chacune au résultat d'une tentative de déchiffrement homomorphe de la troisième donnée avec chaque clé de déchiffrement associée à un desdits terminaux clients 10.1, 10.2, 10.3 stockée par le module matériel de sécurité 3, chiffré de manière homomorphe avec une clé de chiffrement associée audit module matériel de sécurité 3 ;
- Pour chaque cinquième donnée, identifier les cinquièmes données comprenant un bloc de bourrage coïncidant avec ledit bloc de bourrage prédéfini.

L'invention propose également le système comprenant le serveur 2, le module matériel de sécurité 3 et l'ensemble des terminaux client 10.1, 10.2, 10.3 connectés via le réseau 20.

Les terminaux clients 10.1, 10.2, 10.3 comprennent des moyens de traitement de données 11.1, 11.2, 11.3 et des moyens de stockage de données 12.1, 12.2, 12.3 stockant chacun au moins la donnée d'entrée propre à son terminal terminal, la clé (privée) de déchiffrement associé à son terminal et potentiellement chacun la clé de déchiffrement associée au module 3.

Les moyens de données 11.1, 11.2, 11.3 de chaque terminal 10.1, 10.2, 10.3 sont avantageusement configurés pour mettre en œuvre les étapes consistant à :
- Générer la première donnée correspondant à la donnée d'entrée dudit terminal client 10.1, 10.2, 10.3 complétée d'un bloc de bourrage prédéfini et chiffrée de manière homomorphe avec la clé de chiffrement associée audit terminal client 10.1, 10.2, 10.3
- déchiffrer ledit résultat de l'application de la fonction avec la clé de déchiffrement associée au module matériel de sécurité 3.

### Produit programme d'ordinateur

Selon un troisième et un quatrième aspects, l'invention concerne un produit programme d'ordinateur comprenant des instructions de code pour l'exécution (sur les moyens de traitement de donnés 21 du serveur 2 et/ou le module matériel de sécurité 3) d'un procédé selon le premier aspect de traitement sécurisé de données d'entrée, ainsi que des moyens de stockage lisibles par un équipement informatique (par exemple les moyens de stockage de données 22 du serveur 2 et/ou le module matériel de sécurité 3) sur lequel on trouve ce produit programme d'ordinateur.

## Revendications

1. Procédé de traitement sécurisé de données d'entrée, le procédé étant **caractérisé en ce qu'**il comprend la mise en œuvre d'étapes de :
(a) Obtention par des moyens de traitement de données (21) d'un serveur (2), depuis au moins un terminal client d'un ensemble de terminaux client (10.1, 10.2, 10.3) chacun associé à une paire d'une clé de chiffrement et d'une clé de déchiffrement stockée par un module matériel de sécurité (3) connecté auxdits moyens de traitement de données (21), d'une première donnée correspondant à une donnée d'entrée dudit terminal client (10.1, 10.2, 10.3) complétée d'un bloc de bourrage prédéfini et chiffrée de manière homomorphe avec la clé de chiffrement associée audit terminal client (10.1, 10.2, 10.3) ;
(b) Pour chaque première donnée, calcul par les moyens de traitement de données (21), d'une pluralité de troisièmes données correspondant chacune à la somme de ladite première donnée et d'une deuxième donnée correspondant à un masque aléatoire d'un ensemble de masques aléatoires chiffrés de manière homomorphe avec les clés de chiffrement associées à chaque terminal client (10.1, 10.2, 10.3) ;
(c) Pour chaque troisième donnée, calcul par ledit module matériel de sécurité (3) d'une pluralité de quatrièmes données correspondant chacune au résultat d'une tentative de transchiffrement homomorphe de la troisième donnée avec une clé de chiffrement associée audit module matériel de sécurité (3), en supposant successivement la troisième donnée chiffrée avec plusieurs clés de chiffrement associée à un desdits terminaux clients (10.1, 10.2, 10.3) ;
(d) Pour chaque quatrième donnée, calcul par les moyens de traitement de données (21) d'au moins une cinquième donnée correspondant à la différence de ladite quatrième donnée et d'une sixième donnée correspondant à un desdits masques aléatoires chiffré de manière homomorphe avec la clé de chiffrement associée audit module matériel de sécurité (3) ;
(e) Identification par le module matériel de sécurité (3) des cinquièmes données comprenant un bloc de bourrage coïncidant avec ledit bloc de bourrage prédéfini.
(f) Application par les moyens de traitement (21) dans le domaine chiffré d'une fonction correspondant au traitement souhaité à partir des cinquièmes données identifiées, ladite fonction étant composée d'opérations compatibles avec ledit chiffrement homomorphe.

2. Procédé selon la revendication 1, dans lequel ledit chiffrement homomorphe est de type totalement homomorphe, FHE.

3. Procédé selon l'une des revendications 1 et 2, dans lequel l'étape (b) comprend la transmission au module matériel de sécurité (3) dans un ordre aléatoire de la pluralité de troisièmes données ; et/ou l'étape (d) comprend la transmission au module matériel de sécurité (3) dans un ordre aléatoire de la pluralité de cinquièmes données ou des blocs de bourrage de la pluralité de cinquièmes données.

4. Procédé selon l'une des revendications 1 à 3, dans lequel la cinquième donnée calculée pour une quatrième donnée correspond à la différence de ladite quatrième donnée et de la sixième donnée correspondant au même masque aléatoire que la deuxième donnée à partir de laquelle cette quatrième donnée a été calculée.

5. Procédé selon l'une des revendications 1 à 4, dans lequel les étapes (b), (c) et (d) comprennent respectivement le calcul de toutes les troisièmes données possibles, toutes les quatrièmes données possibles, et toutes les cinquièmes données possibles.

6. Procédé selon l'une des revendications 1 à 5, dans lequel l'étape (e) comprend, pour chaque cinquième donnée, la génération par le module matériel de sécurité (3) d'une septième donnée notée ayant une première valeur si la cinquième donnée comprend un bloc de bourrage coïncidant avec ledit bloc de bourrage prédéfini, et une deuxième valeur sinon.

7. Procédé selon la revendication 6, dans lequel ladite première valeur de la septième donnée est la valeur 1 chiffrée de manière homomorphe avec la clé de chiffrement associée audit module matériel de sécurité (3), et la deuxième valeur de la septième donnée est la valeur 0 chiffrée de manière homomorphe avec la clé de chiffrement associée audit module matériel de sécurité (3).

8. Procédé selon la revendication 7, dans lequel l'étape (f) comprend, pour chaque première donnée, le calcul d'une huitième donnée correspondant à la somme de chacun des produits d'une cinquième donnée calculée à partir de cette première donnée, sans son bloc de bourrage, par la septième donnée calculée pour cette cinquième donnée.

9. Procédé selon la revendication 8, dans lequel l'étape (f) comprend l'application de ladite fonction directement aux huitièmes données.

10. Procédé selon l'une des revendication 1 à 9, dans lequel l'étape (a) comprend l'obtention d'une pluralité de premières données depuis un sous-ensemble de terminaux clients dudit ensemble de terminaux client (10.1, 10.2, 10.3), voire tout ledit ensemble de terminaux client (10.1, 10.2, 10.3).

11. Procédé selon l'une des revendication 1 à 10, comprenant une étape (g) de déchiffrement homomorphe, par le module matériel de sécurité (3) et/ou au moins un des terminaux client (10.1, 10.2, 10.3), dudit résultat de l'application de la fonction avec la clé de déchiffrement associée au module matériel de sécurité (3).

12. Procédé selon l'une des revendication 1 à 11, dans lequel chaque quatrième donnée calculée à l'étape (c) correspond au résultat d'une tentative de déchiffrement homomorphe de la troisième donnée avec chaque clé de déchiffrement associée à un desdits terminaux clients (10.1, 10.2, 10.3) stockée par le module matériel de sécurité (3), chiffré de manière homomorphe avec la clé de chiffrement associée audit module matériel de sécurité (3).

13. Ensemble d'un serveur (2) et d'un module matériel de sécurité (3) pour le traitement sécurisé de données d'entrée, **caractérisé en ce que** :
- Le serveur (2) comprend des moyens de traitement de données (21) configurés pour :
∘ Obtenir, depuis au moins un terminal client d'un ensemble de terminaux client (10.1, 10.2, 10.3) chacun associé à une paire d'une clé de chiffrement et d'une clé de déchiffrement stockée par un module matériel de sécurité (3) connecté auxdits moyens de traitement de données (21), une première donnée correspondant à une donnée d'entrée dudit terminal client (10.1, 10.2, 10.3) complétée d'un bloc de bourrage prédéfini et chiffrée de manière homomorphe avec la clé de chiffrement associée audit terminal client (10.1, 10.2, 10.3) ;
∘ Pour chaque première donnée, calculer une pluralité de troisièmes données correspondant chacune à la somme de ladite première donnée et d'une deuxième donnée correspondant à un élément d'un ensemble de masques aléatoires chiffrés de manière homomorphe avec les clés de chiffrement associées à chaque terminal client (10.1, 10.2, 10.3) ;
∘ Pour chaque quatrième donnée, calculer au moins une cinquième donnée correspondant à la différence de ladite quatrième donnée et d'une sixième donnée correspondant à un desdits masques aléatoires chiffré de manière homomorphe avec la clé de chiffrement associée audit module matériel de sécurité (3) ;
∘ Appliquer dans le domaine chiffré une fonction correspondant au traitement souhaité à partir de cinquièmes données identifiées, ladite fonction étant composée d'opérations compatibles avec ledit chiffrement homomorphe.
- Le module matériel de sécurité (3) est configuré pour :
∘ Pour chaque troisième donnée, calculer une pluralité de quatrièmes données correspondant chacune au résultat d'une tentative de transchiffrement homomorphe de la troisième donnée avec une clé de chiffrement associée audit module matériel de sécurité (3), en supposant successivement la troisième donnée chiffrée avec chaque clé de chiffrement associée à un desdits terminaux clients (10.1, 10.2, 10.3) ;
∘ Pour chaque cinquième donnée, identifier les cinquièmes données comprenant un bloc de bourrage coïncidant avec ledit bloc de bourrage prédéfini.

14. Produit programme d'ordinateur comprenant des instructions de code pour l'exécution d'un procédé selon l'une des revendications 1 à 12 de traitement sécurisé de données d'entrée, lorsque ledit programme est exécuté sur un ordinateur.

15. Moyen de stockage lisible par un équipement informatique sur lequel est enregistré un produit programme d'ordinateur comprenant des instructions de code pour l'exécution d'un procédé selon l'une des revendications 1 à 12 de traitement sécurisé de données d'entrée.
